# EUROPEAN PATENT SPECIFICATION

(11) **EP 0 757 618 B1**
(45) Date of publication and mention of the grant of the patent: **30.09.1998**
(21) Application number: 95916516.8
(22) Date of filing: 26.04.1995
(51) Int. Cl.: B29B 7/74

(54) **SYSTEM FOR SHUTTING OFF AND RELIEVING THE PRESSURE IN A LIQUID SUPPLY LINE**
ABDICHT- UND ENTSPANNUNGSSYSTEM EINER FLÜSSIGKEITSVERSORGUNGSLEITUNG
SYSTEME D'OBTURATION ET DE DETENTE D'UNE CONDUITE D'ALIMENTATION EN UN LIQUIDE

(30) Priority: 29.04.1994 BE 9400442
(43) Date of publication of application: 12.02.1997
(73) Proprietor: N.V. SOUDAN PATRIMONIUM AND CONSULTING, 9800 Deinze (BE)
(72) Inventor: SOUDAN, Freddy Delphin, 9800 Deinze (BE)
(74) Representative: De Palmenaer, Roger
(86) International application number: BE9500041
(87) International publication number: WO9530524

(56) References cited:
- EP-A- 0 347 269
- EP-A- 0 378 243

## Description

The present invention relates to a shut-off and pressure-relief system for closing in a sealed manner a line intended to convey foam precursors into a polyurethane foam mixing and dispensing gun, and for annulling the pressure at the closed mouth of the gun by relieving the pressure in the supply line.

A polyurethane foam mixing and dispensing gun comprising a mixing chamber, a retractable or non-retractable shut-off rod which can shut off the mixing chamber over the entire length, an actuating mechanism for moving the shut-off rod in both directions, and a grip, is widely known.

The mixing chamber consists of a cylindrical cavity into which a shut-off rod fits accurately, which rod may be moved alternately in opposite directions by means of an actuating mechanism which consists, for example, of a pneumatic, hydraulic or electrical cylinder actuator.

The foam precursors are conveyed separately towards the mixing chamber via supply lines which are generally under a pressure of at least 6 to 12 bar.

In the most widely known systems, a certain pressure remains along the entire length of the line through which the foam precursors are conveyed. In order to be able to isolate the mixing chamber during shut-downs or interruptions, hand-actuated leaktight shut-off gate valves are provided on each side of the metering apparatus. These gate valves are intended to prevent the infiltration of foam precursors into the mixing chamber of the gun, when the latter is not in use.

The foam precursors are packed into steel cylinders under a nitrogen pressure of 6 to 12 kg/cm² and are delivered by a system under a pressure which may reach 30 bar. The shut-off gate valves allow the lines or drums to be isolated, but these still remain without pressure, even following any interruption in the operation of the metering apparatus.

The foam precursor supply pipe portions which are shut off at each end by the aforementioned valve and the shut-off rod still remain under pressure preload even after prolonged shut-downs. For this reason, minuscule quantities of the two components may react rapidly and form extremely fine sticky foam particles which, even when there are only traces of them, may block the shut-off rod in the mixing chamber.

In the event of the shut-off rod jamming, or of the metering gun becoming obstructed, the mixing chamber and shut-off rod have to be dismantled for cleaning or replacement.

In order to avoid the leakage of liquids, particularly of liquid foam-precursors, into a shut-off line, and overcome the drawbacks of inopportune obstructions, the invention proposes a system for shutting-off and releasing the pressure in a supply line of the type described in the first paragraph of the document.

The system is characterized in that it consists of a pressure pump comprising an expansion chamber by way of pump body and a piston by way of constructional pressure lifting element, the casing of which pump is rinsed by means of a solvent.

The piston has an actuating rod designed to open an intake valve of a pressure pump positioned vertically when the piston reaches the lower inversion point.

According to a specific feature of the invention, the shut-off and pressure-relief system is formed in the line for feeding foam precursors to a polyurethane metering gun comprising a mixing chamber and a shut-off rod which shuts off the mixing chamber in a sealed manner along its entire length and is actuated to-and-fro by an actuating device in such a way that a mixing zone and lateral foam precursor supply openings are freed or shut off.

For preference, the shut-off and pressure-relief system is located in the immediate vicinity of the foam precursor supply orifices in the mixing chamber of the mixing and metering gun, parallel to the longitudinal axis of this mixing chamber.

The invention also relates to the use of the abovementioned shut-off and pressure-relief system as a pressure multiplier for conveying precursors from a drum under an inert gas at a given pressure.

The diameter of the piston of the pressure pump and the stroke of the piston within the pump body determine the volume of foam precursors which can be output at one time. By virtue of the simultaneous operation of the two supply pumps, the foam precursors are metered out in an equal and constant ratio. They are subjected to sufficient pressure and flow towards the mixing chamber of the apparatus at a constant rate, so that the mixing in the mixing chamber takes place homogeneously. Each time operation is interrupted, the pump can act as pressure-relieving apparatus. The apparatus is thus used not only as a supply pump but also as metering apparatus, shut-off member, and pressure-relieving device.

In a specific embodiment, the shut-off and pressure-relief system is located in the immediate vicinity of the foam precursor supply orifices in the mixing chamber, parallel to this chamber.

According to a development of the invention, the liquid or gas driving the shut-off and pressure-relief system is the same as the one used for the device for actuating the mixing and metering gun, parallel to the longitudinal axis of this mixing chamber.

The invention also relates to the use of the shut-off and pressure-relief system as a multiplier for adjusting the rate of flow of foam precursors from a drum under pressure under a nitrogen atmosphere.

The pressure multiplier operates in a cyclic manner by virtue of switches which are fixed at the end of the stroke of the piston of the pressure pump. The switches control fast-acting supply gate valves which open and respectively shut off the pressurized gas supply line.

The features and other features and details of the invention will emerge during the following description, and from an examination of the appended drawings which illustrate by way of nonlimiting example one embodiment of the invention.

In these drawings:
- Figure 1 is an overall view of the supply system provided with two shut-off and pressure-relief systems according to the invention, for the two foam precursors A and B;

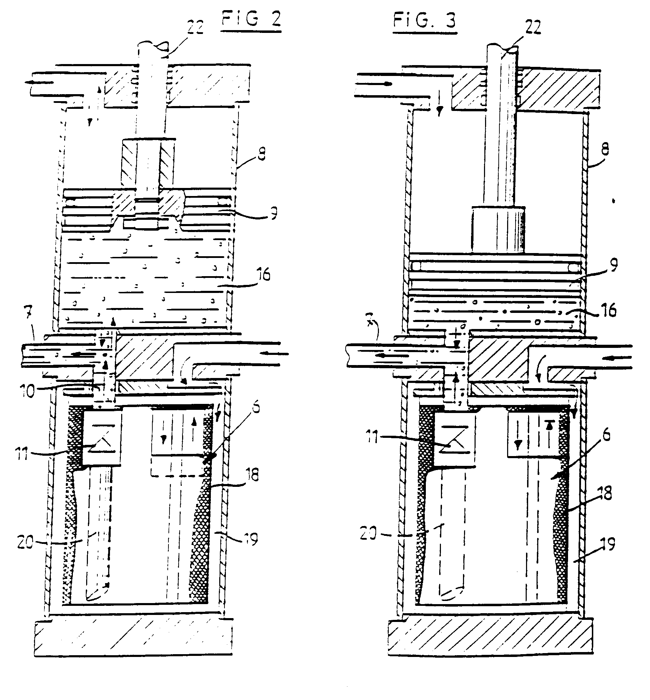

- Figure 2 is a longitudinal section on a larger scale of the shut-off and pressure-relief system according to the invention, while it is drawing a liquid foam-precursor from the supply drum;
- Figure 3 is a longitudinal section similar to that of Figure 2, of the shut-off and pressure-relief system while it is delivering the liquid foam-precursor towards the mixing chamber of the metering gun;

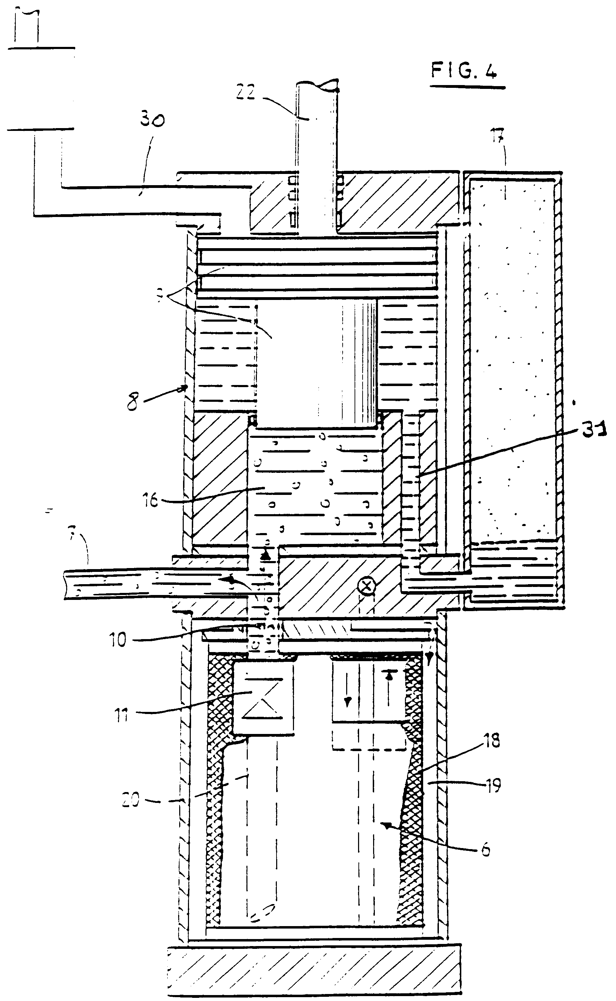

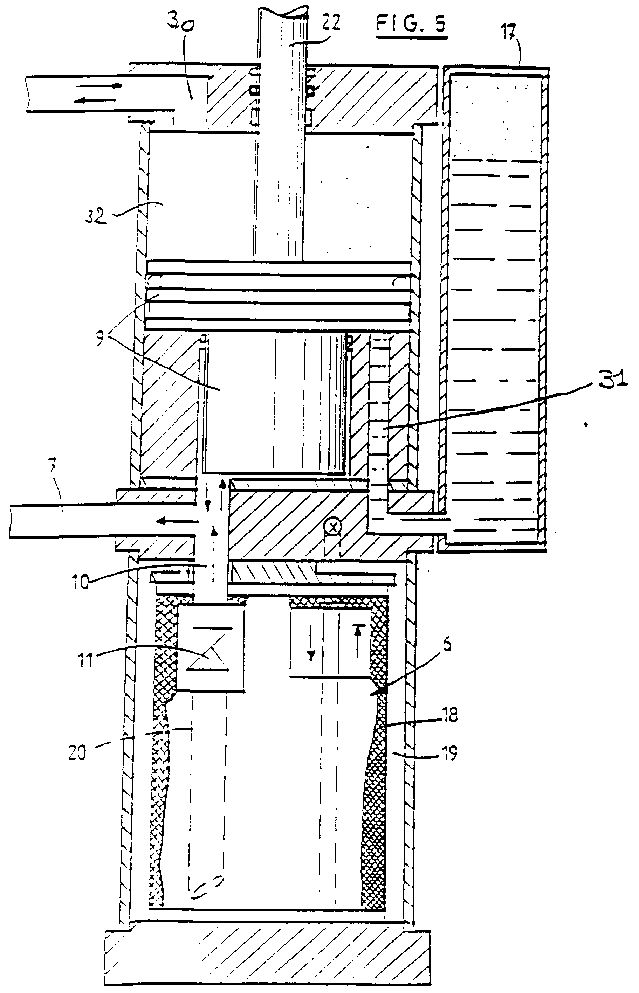

- Figures 4 and 5 are each a longitudinal section of a border of the automatic shut-off and pressure-relief valves mounted on each side of a mixing and metering gun.

In these drawings, the same reference symbols denote identical or similar elements.

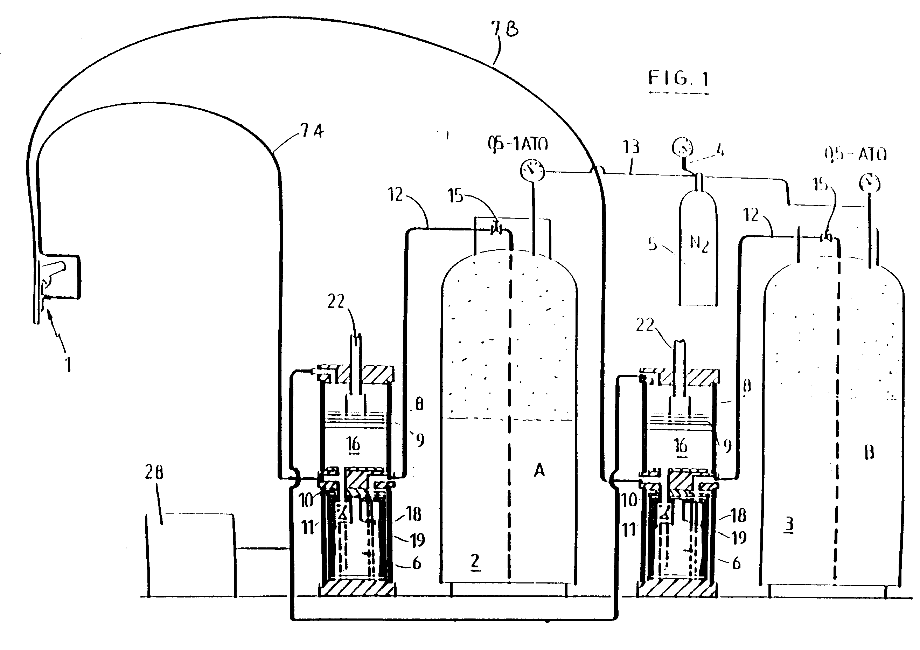

As illustrated in Figure 1, the mixing gun is supplied with foam precursors from two drums which consist of replaceable cylinders 2, 3 and in which the base constituents A and B are delivered.

### Example 1

The two cylinders 2, 3 are under a nitrogen pressure of 6 to 12 bar adjusted by a pressure-reducing device 4 connected to a cylinder 5. The essential components A and B are conveyed under pressure to the mixing gun 1 by a supply line 7A, 7B

The flow rate at which the two constituents A and B are metered in an equal ratio is adjusted separately in each supply line 7A, 7B with the aid of a shut-off and pressure-relief system 6 according to the invention. The apparatus is mounted in each supply line 7A, 7B. It is capable of relieving the pressure in the supply line 7A, 7B as far as ambient pressure, when the supply line is shut off at both ends, namely at the outlet of the cylinders 2, 3 and at the inlet of the mixing gun 1.

The shut-off and pressure-relief system 6 consists of a lift pump comprising a cylindrical expansion chamber 8 acting as a pump body and a piston acting as the constructional element lifted by pressure. The piston 9 bears an actuating rod designed to open an inlet valve 11 when the piston 9 reaches its lower inversion point.

The supply line portions acting as inlet and outlet of the expansion chamber 8 emerge in the bottom thereof via an intake valve 11.

The system is intended mainly to allow a trapped liquid to escape when the supply lines 7A, 7B are shut off at both ends by leaktight gate valves 15.

The storage drums 2, 3 consist of pressurized drums provided with a delivery line 12 for each precursor A or B and a nitrogen supply line 13. When the mixing gun 1 is put into service, nitrogen is conveyed into each storage drum and the pressure is adjusted to 6 bar. The nitrogen will exert a pressure on the surface of the liquid and will deliver the precursors into the expansion chamber 8, the supply orifice of which is provided with an intake valve 11.
The non-return valve 11 shuts off the supply orifice of the expansion chamber 8 for as long as the pressure pump is not empty and as long as the piston 9 has not reached its lower inversion point.

The pressure as present in the steel cylinder 2, 3 cannot act beyond the non-return valve.

The piston 9 occupies a position which is not determined precisely. In any case, the piston 9 does not push the valve stem downwards.

If compressed air at 6 atm is applied to the piston 9 via the inlet 30, the air-filled chamber 32 will be enlarged by the downward movement of the piston 9. The Mesamoll® from the cylindrical chamber 16 will be delivered via a pipe 31 towards the pressurized drum 17.

By bringing compressed air onto the piston 9, it is possible to pressurize the raw material present in the chamber 16, effectively so that it is under a higher pressure than the one in the cylinders 2, 3. This makes sure that a pressure is supplied which is instantaneously higher in the start-up phase for a few seconds. This helps in quickly pressurizing the metering system, and reducing the known low flow rates especially of the component B during the first few seconds. Once the lower part of the piston has reached the very end of its travel, it pushes the rod back downwards (see drawing 3).

When the intake valve 11 is pushed in by the rod 10 and is open, the consequence of this is that the base product flows immediately under pressure along the supply line towards the flexible line.
If the compressed air pressure exerted on the piston is removed, the pressure exerted on the base product, which is kept constant by opening the valve on the surface of the piston, at the same time as the constant pressure of Mesamoll exerted on the available portion of the piston 9 in the Mesamoll compartment of the piston body 16 ensure that the piston comes back up immediately.

As a result of this the rod is no longer pushed downwards and the non-return valve closes. The residual potential working pressure in the flexible line 7 will be sent, owing to the mechanical narrowing of the flexible line, towards the expansion chamber 16, which will balance out at a level equal to practically zero pressure. Since the Mesamoll® on the available surface area of the piston, just like the base product on the surface area of the piston, interact in the same direction and the same sense, care must be taken to ensure that the pressure, which is still present at this stage, is zero or almost zero in the cylinder 17.

At a higher pressure in the cylinder, the Mesamoll will also continue to push the piston 9 back upwards, the consequence of this being the possible setting-up of a partial vacuum in the flexible line 7. This possible partial vacuum will have no effect on the sealing of the mixing chamber.

When the storage drum 2 or 3 becomes empty, a level switch shuts off the nitrogen gate valve 15. The empty drum is ecological because it can be refilled again without having to be cleaned out.

### Example 2

The pressure of nitrogen supplied by means of a pressure-reducing device 4 in engagement on a nitrogen cylinder 5 is set to a ½ to 1 bar in the foam precursor supply barrels. The essential components A and B are forced to penetrate a cylindrical filter 18 along an annular slit 19 via their respective supply line 7. The essential components reach a pressure pump via an ascending tube 20 mounted inside the filter 18 and via a non-return valve 11.

The essential components A and B flow from this pump via a flexible line 7 which is maintained at temperature with the aid of electrical resistive elements, towards the inlet of the mixing gun 1.

A hydraulic unit 28 containing Mesamoll® as hydraulic fluid supplies a predetermined pressure which may vary between 25 and 60 bar, when the trigger of the mixing gun 1 is pressed. This pressure would move the moving piston and deliver the essential components from the cylindrical chamber 16.
The valve 11 allows no liquid to pass in this direction so that the only possible outlet for this liquid towards the mixing gun 1 is the line 7. As soon as the mixing gun 1 opens, the two essential components mix in the mixing chamber at a pressure equal to the respective pressure in each of the cylindrical chambers 16.

At the end of injection, the pressure of the hydraulic fluid on the chamber 8 is immediately interrupted after the gun is shut off. The residual pressure still present in the flexible line 7 drops immediately, because the excess amount of essential components is delivered to the chambers 8 owing to the mechanical narrowing in the flexible lines 7. The residual pressure in the mixing chamber and in the flexible line, as well as in the chamber 8, is equal to the pressure in the filter portion 18, which is potentially equal to the pressure in the steel cylinders 2, 3, namely ½ to 1 bar.

The delivery of the pressure chamber 8 will be continued to be supplied through the upward movement of the piston 9, and this will be done at a pressure of ½ to 1 bar in cylinders 2, 3. The normal position of the moving piston 9 is therefore always bounded at the top by the insert against the pump flange. When, during a long injection sequence, the contents of which exceed that of the delivery chamber 8, when the moving piston 9 has almost reached the bottom of the said chamber and the risk of a shortage of raw material or a drop in pressure is looming, an end-of-stroke switch mounted on the guide rod 22 will close the gun and annul the Mesamoll pressure just before this situation is reached, so that the pressure chamber 8 will be filled again with new essential component. A second end-of-stroke switch will signal the maximum position.

In a more sophisticated version, the end-of-stroke switches are replaced by a linear distance measurement which transmits this information to a microprocessor which in turn manages each stage.

The originality of the concept is based on the fact that the flexible line for supplying foam precursors to the mixing gun 1 manages to be under pressure only when injection is taking place, and for the few seconds thereafter.

Next, the working pressure present, which is normally constant, is reduced to a pressure of a ½ to 1 bar. The low pressures constitute no problem for any possible blockages of the mixing chamber of the mixing gun 1 by the essential components A and B.

This medium in liquid phase, namely Mesamoll® which transmits the pressure, is a solvent which, apart from its hydraulic fluid qualities, has perfect solvent and plasticizer properties for the two essential components. The walls of the pump body will always be covered with Mesamoll during every movement. Any microscopic particles of the essential components which might stick to the wall of the pump body 16 are dissolved, and lubrication of the piston 9 is ensured. It is also important for the pressure below and above the moving piston 9 to be identical so that infiltration of sticky particles which would result from a difference in pressure in the two chambers 8, is non-existent.

### Example 3

A nitrogen pressure of ½ to 1 bar is set in the cylinders.

The essential components A and B come from a filter 18, enter a lift pump via the non-return valve 11 and are conveyed via a flexible line 7 which is maintained at constant temperature with the aid of electrical resistive elements, to the inlet of a mixing gun 1.

The electro-pneumatic valve supplies compressed air at 6 to 7 atm above atmospheric pressure when the trigger of the mixing gun is pressed. This pressure moves the piston downwards. The bearing surface of the buffer which is fixed to the piston has a surface area 2.6 times less than that of the piston.

The base product in the chamber is pressurized.

The shut-off and pressure-relief system acts as a pressure multiplier. The second piston exerts on the first piston a force which is greater with respect to their surface area, in order to adjust the conveying of liquid foam-precursors from the two pressurized drums 2, 3.

The Mesamoll® present in the part of the body 16 of the piston which is reserved for the solvent is conveyed via the pipe formed in the reducing unit to the pressurized reservoir 17.
The nitrogen accumulator present, which is equal to 0.5 bar when the part of the body 16 of the piston which is reserved for the Mesamoll® is full of Mesamoll, is compressed. This compressed bubble of nitrogen, which sits over the top of the Mesamoll®, will ensure that once the pressure of compressed air exerted on the piston 9 has disappeared, this piston is moved upwards again because the pressure in that part of the body 16 of the piston which is reserved for the Mesamoll® will be exerted on the surface area of this piston which is still available.

Any possible microscopic particles of the essential components which stay behind to stick to the wall of the pump body are dissolved in the Mesamoll® and the lubrication of the piston 9 is ensured by Mesamoll®.

Upon each instantaneous interruption in operation, the compressed air supply is interrupted and the upper piston body, having the piston of largest diameter, is vented, relieving the pressure of the propellent gas via the electro-pneumatic valve, so that the gas no longer exerts any pressure on the piston.

The working pressure in the flexible lines drops immediately because the excess essential components are delivered to the chambers owing to the mechanical narrowing of the flexible lines 7. The residual pressure in the mixing chamber and in the flexible line, as in the product chamber, is equal to the pressure in that part of the filter in which the potential pressure is equal to the pressure in the steel cylinders, namely ½ to 1 bar.

### Example 4

In one embodiment, the first piston 9 of the shut-off and pressure-relief system 6 is actuated hydraulically. The expansion chamber of the system is filled with foam precursors coming from the pressurized drum 2, 3, via a non-return valve 11, as in the second embodiment. The hydraulic liquid is preferably Mesamoll®.

By virtue of the fact that the second piston is transferred to various locations, the latter piston has no shut-off function but merely aims to convey the hydraulic liquid.

The hydraulic unit 8, having Mesamoll® by way of hydraulic liquid, delivers a pressure varying between 25 and 60 bar when the trigger of the mixing gun is pressed. This pressure moves the piston 9 and therefore exerts an identical pressure on the main components in the pressure chamber.
The valve does not allow liquid to pass so that the only possible outlet for it is the line 7. As soon as the mixing gun opens, the two components A and B will mix in the mixing chamber at a pressure equal to the respective pressure in the chambers 8 reserved for the products.

At the end of injection, the hydraulic pressure exerted by the liquid on the chambers 8 is immediately interrupted when the gun is shut off. The residual working pressure in the flexible lines drops immediately because the excess essential components are delivered towards the chambers 8 owing to the mechanical narrowing of the flexible lines 7. The residual pressure exerted in the mixing chamber and the flexible line, including the chamber 8, is equal to the pressure in that filter portion which is potentially equal to the pressure of the steel cylinders, namely ½ to 1 bar.

The pressure chamber 8 will then be supplied by moving the piston upwards, and this will take place at the pressure of the cylinders (½ to 1 bar). The normal position of the moving piston will therefore always be bounded at the top by a spacer piece located against the flange.
When, during injection of long duration, which might exceed the content of the pressure chamber, the moving piston 9 almost reaches the end of the said chamber, and the risk of a shortage of essential product or of a partial vacuum becomes evident, an end-of-stroke switch which is mounted on the guide rod 22 will close the gun and annul the Mesamoll pressure just before this situation arises, so that the pressure chamber will fill again with more essential components A and B. A second end-of-stroke switch will transmit the maximum level.

In a more elaborate version, the end-of-stroke switches are replaced by a linear distance measurement which transmits this information to the microprocessor which manages each stage in turn.

The originality of the concept lies in the fact that the flexible line 7 coming from the pressure part towards the gun becomes pressurized only when injection is being carried out, and during the few seconds thereafter. Afterwards, the pressure drops until it is equal to that in the supply line (½ to 1 bar). Given that the same pressure is present directly on the closed mixing chamber of the gun, the working pressure present, which is normally constant, is reduced down to a pressure of ½ to 1 bar. The low pressures constitute no risk of any blocking of the mixing chamber by the essential components.

The moving piston moves in the same cylinder. The fluid which transmits the pressure, namely the Mesamoll®, is a solvent which, apart from its hydraulic liquid qualities, has, with regard to the two essential components, perfect properties of solvent and of plasticizer action. The walls of the body of the piston therefore come under a Mesamoll pressure each time there is movement. Any possible microscopic particles of essential component which might stick to the wall of the body of the piston are dissolved, and lubrication of the piston 9 is ensured.

It is likewise important for the pressure below the moving piston to be identical to the one above the piston so that infiltration of sticky particles which would be due to the difference in pressure in the two chambers is non-existent.

The shut-off and pressure-relief valve is preferably mounted in the line for supplying foam precursors to a polyurethane foam mixing and metering gun.

Such a gun comprises a mixing chamber, a retractable or non-retractable shut-off rod which may shut off the mixing chamber over the entire length, and a driving part which may drive the said shut-off rod to and fro to free the mixing zone and open the lateral foam precursor supply openings. The shut-off and pressure-relief system is provided in the immediate vicinity of the mouth of the foam precursor supply lines so that the expansion chamber extends parallel to the mixing chamber of the gun.

When the mixing and metering gun is working, an actuating liquid or gas, generally the same as the one used for the driving part of a mixing and metering gun, pushes the first and second pistons back against a helical spring. As a consequence of this, the foam precursor may flow freely through the expansion chamber when the shut-off rod frees the supply openings to the mixing chamber when the gun is working. As soon as the driving part pushes the shut-off rod back into the mixing chamber, the operation of the gun is interrupted.
The liquid pressure in the storage drum is the preload force of the spring pushing the piston back upwards.

The pressure multiplier ensures that the foam precursors are available in the vicinity of the mixing chamber under a suitable pressure straight away after, each working of the gun following any interruption.

## Claims

1. Shut-off and pressure-relief system (6) for closing in a sealed manner a line intended to convey foam precursors into a polyurethane foam mixing and dispensing gun, and for annulling the pressure at the closed mouth of the gun by relieving the pressure in the supply line (7), characterized in that it consists of a piston type pressure pump comprising an expansion chamber (8) and a piston (9) the casing of which pump is rinsed by means of a solvent and in that the piston (9) has an actuating rod designed to open an intake valve (11) of the pump positioned vertically when the piston (9) reaches the lower inversion point.

2. Shut-off and pressure-relief system according to Claim 1, characterized in that any microscopic particles of the essential components which stick to the wall of the pump body are dissolved in solvent and lubricate the piston (9) with the aid the solvent .

3. Shut-off and pressure-relief system according to Claim 1, characterized in that it is located in the immediate vicinity of the foam precursor supply orifices in the mixing chamber of the mixing and metering gun, parallel to the longitudinal axis of this mixing chamber.

4. Shut-off and pressure-relief system according to any one of the preceding claims, characterized in that the liquid or gas which drives the shut-off and pressure-relief system is the same as the one in the device for actuating the mixing and metering gun, parallel to the longitudinal axis of this mixing chamber.

5. Use of a shut-off and pressure-relief system according to Claim 1 or 2 as a multipler for adjusting the rate of flow of foam precursors from a drum under pressure under a nitrogen atmosphere.

6. Use according to Claim 5, characterized in that a level switch (22), which is mounted at the end of the stroke of the piston (9), controls a fast-acting gate valve which opens and respectively shuts off the pressurized gas supply line.

## Patentansprüche

1. Absperr- und Druckentlastungssystem (6) zum dichten Verschließen einer Leitung, mit der Schaumvorläufer in eine Polyuretanschaum-Misch- und- Spendekanone befördert werden sollen, und zum Beseitigen des Drucks an der geschlossenen Mündung der Kanone durch Entlasten des Drucks in der Versorgungsleitung (7), dadurch gekennzeichnet, daß es aus einer Kolben-Druckpumpe besteht, die eine Expansionskammer (8) und einen Kolben (9) enthält, wobei das Gehäuse der Pumpe durch ein Lösungsmittel gespült wird, und daß der Kolben (9) eine Betätigungsstange enthält, die so beschaffen ist, daß sie ein Einlaßventil (11) der vertikal angeordneten Pumpe öffnet, wenn der Kolben (9) den unteren Umkehrpunkt erreicht.

2. Absperr- und Druckentlastungssystem nach Anspruch 1, dadurch gekennzeichnet, daß irgendwelche mikroskopischen Partikel der wesentlichen Komponenten, die an der Wand des Pumpenkörpers anhaften, im Lösungsmittel gelöst werden und den Kolben (9) mit Hilfe des Lösungsmittels schmieren.

3. Absperr- und Druckentlastungssystem nach Anspruch 1, dadurch gekennzeichnet, daß es in unmittelbarer Umgebung der Schaumvorläufer-Zufuhrmündungen in der Mischungskammer der Misch- und Dosierungskanone parallel zur Längsachse dieser Mischungskammer angeordnet ist.

4. Absperr- und Druckentlastungssystem nach irgendeinem der vorangehenden Ansprüche, dadurch gekennzeichnet, daß die Flüssigkeit oder das Gas, das das Absperr- und Druckentlastungssystem antreibt, das gleiche ist wie dasjenige in der Vorrichtung zum Betätigen der Misch- und Dosierungskanone parallel zur Längsachse dieser Mischungskammer.

5. Verwendung eines Absperr- und Druckentlastungssystems nach Anspruch 1 oder 2 als Vervielfacher zum Einstellen der Schaumvorläufer-Durchflußmenge von einer unter Druck stehenden Trommel in einer Stickstoffatmosphäre.

6. Verwendung nach Anspruch 5, dadurch gekennzeichnet, daß ein Pegelschalter (22), der am Ende des Hubs des Kolbens (9) angebracht ist, ein schnellwirkendes Torventil steuert, das die mit Druck beaufschlagte Versorgungsleitung öffnet bzw. absperrt.

## Revendications

1. Système d'obturation et de détente (6) pour fermer, d'une manière étanche une conduite destinée à amener des précurseurs de mousse à un pistolet distributeur-mélangeur de mousse de polyuréthanne, et pour annuler la pression à la bouche fermée du pistolet en détendant la pression dans la conduite d'amenée (7), caractérisé en ce qu'il consiste en un piston du type pompe foulante comprenant une chambre d'expansion (8) et un piston (9), le corps de cette pompe étant rincé au moyen d'un solvant et en ce que le piston (9) possède une tige de commande pour ouvrir et fermer une soupape d'admission (11) de la pompe positionnée de manière verticale, lorsque le piston (9) atteint le point d'inversion inférieur.

2. Système d'obturation et de détente selon la revendication 1, caractérisé en ce que toute particule microscopique des composants essentiels, collant à la paroi du corps de la pompe soit dissoute dans le solvant et lubrifie le piston (9) à l'aide du solvant.

3. Système d'obturation et de détente selon la revendication 1, caractérisé en ce qu'il se trouve à proximité immédiate des orifices d'amenée des précurseurs de mousse dans la chambre de mixage du pistolet mélangeur et de mesurage, parallèle à l'axe longitudinal de cette chambre de mélange.

4. Système d'obturation et de détente selon l'une quelconque des revendications précédentes, caractérisé en ce que le liquide ou le gaz commandant le système d'obturation et de détente est le même que celui utilisé dans le dispositif pour commander le pistolet mélangeur et de mesurage, parallèle à l'axe longitudinal de cette chambre de mélange.

5. L'utilisation du système d'obturation et de détente selon la revendication 1 ou 2 en tant qu'un multiplicateur pour régler le débit des précurseurs de mousse depuis un tonneau sous pression dans un atmosphère azotée.

6. L'utilisation selon la revendication 5, caractérisée en ce qu'un interrupteur de niveau (22), qui est monté au bout de la course du piston (9), commande une vanne à action rapide ouvrant, respectivement fermant la conduite de gaz pressurisé.
